**Europäisches Patentamt**

**European Patent Office**

**Office européen des brevets**

(19)

(11) Veröffentlichungsnummer: **0 026 914**
**B1**

(12) **EUROPÄISCHE PATENTSCHRIFT**

(45) Veröffentlichungstag der Patentschrift:
27.10.82

(51) Int. Cl.³: **B 01 J 13/02,** B 41 M 5/02

(21) Anmeldenummer: **80105934.6**

(22) Anmeldetag: **01.10.80**

(54) Verfahren zur Herstellung von Mikrokapseln, die nach dem Verfahren erhaltenen Mikrokapseln, die Verwendung der Mikrokapseln zur Herstellung von druckempfindlichen Aufzeichnungspapieren und druckempfindliches Aufzeichnungssystem.

(30) Priorität: **08.10.79 DE 2940786**

(43) Veröffentlichungstag der Anmeldung:
**15.04.81 Patentblatt 81/15**

(45) Bekanntmachung des Hinweises auf die Patenterteilung:
**27.10.82 Patentblatt 82/43**

(84) Benannte Vertragsstaaten:
**AT BE CH DE FR GB IT LI SE**

(56) Entgegenhaltungen:
**DE-A-1 444 414**
**DE-A-2 434 406**
**DE-A-2 529 427**
**DE-A-2 538 015**
**DE-A-2 832 637**
**US-A-4 157 983**

Die Akte enthält technische Angaben, die nach dem Eingang der Anmeldung eingereicht wurden und die nicht in dieser Patentschrift enthalten sind.

(73) Patentinhaber: **BASF Aktiengesellschaft,**
**Carl-Bosch-Strasse 38, D-6700 Ludwigshafen (DE)**

(72) Erfinder: **Sliwka, Wolfgang, Dr., Diemstrasse 8,**
**D-6940 Weinheim (DE)**

Verfahren zur Herstellung von Mikrokapseln, die nach dem Verfahren erhaltenen
Mikrokapseln, die Verwendung der Mikrokapseln zur Herstellung von druckempfindlichen
Aufzeichnungspapieren und druckempfindliches Aufzeichnungssystem

Die Erfindung betrifft ein Verfahren zur Herstellung von Mikrokapseln auf der Basis von Melamin-Formaldehyd-Harzen, die nach dem Verfahren erhaltenen Mikrokapseln und deren Verwendung für druckempfindliche Aufzeichnungssysteme.

Aus der Patentliteratur sind schon seit einiger Zeit Mikrokapseln bekannt, deren Hüllen aus Polykondensaten auf der Basis Harnstoff, Phenol oder Melamin und Formaldehyd bestehen.

In der US-A-3 016 308 ist z. B. angegeben, daß als Wandmaterial unter vielen anderen Harzen auch Melaminharze, z. B. aus Melamin und Formaldehyd oder Harnstoffharze, wie Harnstoff-Formaldehyd-Harze in Betracht kommen. Nach den Angaben im Beispiel IV der US-A erfolgt die Bildung des Wandmaterials aus den Komponenten in stark salzsaurer Lösung in Gegenwart von Carboxymethylcellulose, die eine sehr niedrige Viskosität aufweist. Wegen des sehr niedrigen pH in der wäßrigen kontinuierlichen Phase ist dieses Verfahren zur Herstellung von Farbbildnern enthaltenden Mikrokapseln ungeeignet, da die Farbbildner bereits beim Dispergieren mit der Säure unter Farbbildung reagieren. Außerdem hat das Verfahren den Nachteil, daß Mikrokapseln mit einem breiten Teilchengrößenspektrum von 4 bis 50 µm gebildet werden.

In der CA-A-742 643 werden Mikrokapseln beschrieben, deren Wandmaterial aus Harnstoff-Formaldehyd-Kondensaten und Harnstoff-Melamin-Kondensaten besteht. Das Wandmaterial wird durch in situ-Kondensation aus Harnstoff, Formaldehyd und ggf. Melamin in wäßriger Phase oder aus wasserlöslichen, niedermolekularen Praepolymeren in wäßriger Phase in Abwesenheit von weiteren Mitteln erhalten. Um sehr kleine Kapseln zu erhalten, muß die Kondensation sehr langsam erfolgen, damit die Dispersion nicht geliert oder dick und zähflüssig wird. Aus letzterem Grund muß die Konzentration der Dispersion an dispergierten Teilchen unterhalb von 20 Gew.-% gehalten werden.

Aus der DE-A-2 529 427 ist ein Verfahren zur Herstellung kleiner Kapseln mit einem Wandmaterial auf Basis Harnstoff, Formaldehyd und ggf. Melamin bekannt. Die Herstellung erfolgt durch in-situ-Kondensation in einer wäßrigen Lösung in Gegenwart eines negativ geladenen polymeren Polyelektrolyten mit einem linearen aliphatischen Kohlenwasserstoffskelett mit durchschnittlich 2 Carboxylgruppen je 4 C-Atome des Stammkörpers, wobei das Kohlenwasserstoffskelett sonst unsubstituiert oder im Mittel eine Methoxygruppe je 4 C-Atome des Stammkörpers tragen kann.

In der DE-A-2 757 528 wird die Herstellung von kleinen Polymerkapseln beschrieben, wobei hier die kondensationsfähigen Ausgangsstoffe, wie Melamin, Methylolmelamin oder methyliertes Methylolmelamin, Präpolymere davon mit niedrigem Molekulargewicht oder Gemische davon in Gegenwart der vorstehend genannten polymeren Polyelektrolyten zum Wandmaterial polykondensiert werden.

Das aus der DE-A-2 757 634 bekannte Verfahren zur Herstellung von kleinen Polymerkapseln entspricht dem aus der DE-A-2 529 427 bekannten Verfahren. Der Unterschied zu dem aus der DE-A-2 529 427 bekannten Verfahren besteht darin, daß im Falle der DE-A-2 757 634 Dimethylolharnstoff oder methylierter Dimethylolharnstoff als Ausgangsstoff für das Wandmaterial verwendet wird (vgl. Anspruch 1).

Als negativ geladene polymere Polyelektrolyte mit linearem Kohlenstoffskelett — in den DE-A auch als Systemmodifikatoren bezeichnet — kommen für die in den DE-A-2 529 427, 2 757 634 und 2 757 528 beschriebenen Verfahren Äthylen-Maleinsäureanhydrid-Copolymere, Methylvinyläther-Maleinsäureanhydrid-Copolymere, Polyacrylsäure, Propylen-Maleinsäureanhydrid-Copolymere, Butadien-Maleinsäureanhydrid-Copolymere und Vinylacetat-Maleinsäureanhydrid-Copolymere mit Molgewichten von 1000 bis 250.000 in Betracht.

Nach den Angaben in der DE-A-2 757 528 sollen durch Kondensation bei relativ hohen pH-Werten von 4,3 bis 6 in der wäßrigen Phase Kapseldispersionen mit einem Gehalt von mehr als 40 Vol.-% an Kapseln erhalten werden. Die Dispersion enthält nach den Angaben in der Beschreibung Kapseln von 1 bis 100 µm, vorzugsweise von 1 bis 50 µm Durchmesser, wobei die einzelnen Kapseln im wesentlichen kugelförmig sind. Weiterhin soll die Viskosität der Kapseldispersion bei geeigneter Wahl der Systemmodifikatoren (d. s. die wasserlöslichen negativ geladenen polymeren Polyelektrolyte) bei Werten von unterhalb 300 cps ($\cong$ 300 mPs) liegen. Jedoch werden in keinem Beispiel Angaben über die Viskosität der erhaltenen Kapseldispersion oder über die Größenverteilung der Kapseln gemacht.

Bei der Nacharbeitung einiger Beispiele der DE-A-2 757 528, wobei die Emulgierung des Kernmaterials mit einem schnellaufenden Propellerrührer erfolgte, wurden Mikrokapseln mit einem Teilchengrößenspektrum zwischen 1 und 180 µm erhalten: viele Kapseln weisen Durchmesser von 3 bis 25 µm auf, wobei bimodale Durchmesserverteilungen festgestellt wurden. Daneben wurden aber auch noch viele Kapseln von 3 bis 1 µm und einige von bis zu 180 µm Durchmesser gefunden. Nach den mikroskopischen Aufnahmen ist die Kapseloberfläche nicht rund und glatt, sondern zeigt Dellen und Falten, teilweise sind die Mikrokapseln unregelmäßig in der Form. Trägt man die erhaltene Mikrokapseldispersion auf eine CF-Seite eines Reaktionsdurchschreibepapiers auf, dann ist das Papier mit vielen blauen Punkten übersät. Solche Mikrokapseldispersionen sind zur Herstellung von Durchschreibepapieren nicht geeignet, da die Papiere nicht sauber sind oder sauber bleiben. Ein weiterer Nachteil dieser Kapseldispersionen liegt in den darin enthaltenen großen Kapseln. Durch letztere wird das beschichtete Papier sehr reibempfindlich. Außerdem ist die Schriftschärfe und damit die Lesbarkeit der Durchschrift wegen der vielen großen Kapseln sehr schlecht.

Die größeren Kapseln könnten zwar über ein Sieb mit 25 µm Maschenweite abgetrennt (abgesiebt) werden. Hierbei tritt jedoch ein erheblicher Verlust an Mikrokapseln ein: man erhält Mikrokapseldispersionen, die einen deutlich geringeren Gehalt an Kapseln aufweisen. Außerdem werden beim Sieben in mehr oder minder großem Umfang die sehr spröden großen Kapseln auf dem Sieb zerstört, wodurch die Dispersion durch auslaufendes Kernmaterial verunreinigt wird.

Führt man die Dispergierung des Kernmaterials in einem schnellaufenden Dispergator oder Homogenisator durch, um kleinere Kapseln zu erhalten, so erstarrt die feinteilige Emulsion nach wenigen Minuten. Die Gelierung der Emulsion tritt auch ein, wenn man Polyelektrolyte mit höherem Molekulargewicht verwendet, da in diesen Fällen die Ausgangsemulsionen bereits sehr viskos sind und bereits kurz nach Beginn der Kondensation nicht mehr durchmischt werden können. Dementsprechend werden nach den Angaben in der DE-A-2 757 528 niedermolekulare polymere Polyelektrolyte, wie sie z. B. zur Dispergierung von Pigmenten in der Papierindustrie benutzt werden, verwendet, um die Viskosität der über 40gew.-%igen Kapseldispersionen niedrig zu halten.

Bei dem Verfahren des Standes der Technik wird das Wandmaterial sowohl durch in-situ-Polymerisation aus Melamin und Formaldehyd als auch durch Kondensation von Melamin-Formaldehyd-Vorkondensaten oder deren Äthern hergestellt, wobei in allen Fällen das Verhältnis Melamin zu Formaldehyd zwischen etwa 1 : 1,5 und 1 : 3 liegt. Die hierbei resultierenden Produkte sind sehr reaktionsfähig, d. h. sie kondensieren rasch zu Produkten mit höherem Molekulargewicht, die beim Verdünnen mit Wasser, bzw. beim Eintragen in die wäßrige Dispersion des Kernmaterials ausfallen (GB-A-1 221 489). Da die Fällung in der Regel sehr grobteilig ist, erhält man nach diesen Verfahren keine kleinen und dichten Mikrokapseln, die für druckempfindliche Aufzeichnungsmaterialien geeignet sind.

In der DE-A-2 832 637 wird ein Verfahren zur Herstellung von Mikrokapseln beschrieben, bei dem die Kapselwand aus Harnstoff und Formaldehyd in Gegenwart eines anionischen Polyelektrolyten und eines Ammoniumsalzes einer Säure gebildet wird. Für dieses Verfahren kommen als anionische Polyelektrolyte Copolymere des Maleinsäureanhydrids, Homopolymere oder Copolymere der Acrylsäure oder Methacrylsäure oder Polymere oder Copolymere der Vinylbenzolsulfonsäure in Betracht. Als geeignete Copolymere mit Vinylbenzolsulfonsäure werden auf Seite 10 solche mit Methylmethacrylat, Vinylacetat, Acrylamid, Acryloylmorpholin oder mit N-Vinylpyrrolidon genannt.

Für die Durchführung des Verfahrens der DE-A-2 832 637 ist wesentlich, daß die Kondensation in Gegenwart von Ammoniumsalzen von aliphatischen Carbonsäuren mit niedrigerem Molekulargewicht oder von anorganischen Säuren erfolgt.

Wendet man dieses Verfahren auf Vorkondensate aus Melamin und Formaldehyd an, dann erhält man sowohl in Gegenwart von Carboxylgruppen enthaltenden Polyelektrolyten wie auch in Gegenwart von Polymeren mit Vinylbenzolsulfonsäure das gleiche Ergebnis wie bei dem aus der DE-A-2 757 528 bekannten Verfahren: kurze Zeit nach der Zugabe des Melaminvorkondensates geliert die Emulsion. Die Kapseln agglomerieren und es wird keine brauchbare Mikrokapseldispersion erhalten.

Aufgabe der vorliegenden Erfindung war es, ein Verfahren aufzufinden, nach dem dichte Mikrokapseln mit einem Wandmaterial aus Melamin-Formaldehyd-Kondensaten hergestellt werden können, die u. a. auch für durckempfindliche Aufzeichnungssysteme geeignet sind.

Es wurde gefunden, daß man Mikrokapseln durch Kondensation von Melamin-Formaldehyd-Vorkondensaten und/oder deren $C_1$- bis $C_4$-Alkyläthern in Wasser, in dem das feste, flüssige oder gasförmige, im wesentlichen wasserunlösliche, den Kapselkern bildende Material dispergiert ist, in Gegenwart von gelösten Polymeren, die negativ geladene ionische Gruppen enthalten, bei pH-Werten von 3 bis 6,5 und Temperaturen von 20 bis 100°C erhält, wenn das in Wasser gelöste Polymere ein Sulfonsäuregruppen tragendes Homo- oder Copolymerisat, das frei von Phenyl und/oder Sulfophenylgruppen ist, das einen K-Wert nach Fikentscher von 100 bis 170 oder eine Viskosität von 200 bis 5000 mPs bei einem Schergefälle von 489 s$^{-1}$ (gemessen in 20gew.-%iger wäßriger Lösung bei 25°C) hat, und das Melamin-Formaldehyd-Vorkondensat nach Maßgabe der Kondensation kontinuierlich oder in Portionen zugegeben wird.

Nach dem erfindungsgemäßen Verfahren können Mikrokapseldispersionen mit einem Gehalt von bis zu 60 Gew.-% an Mikrokapseln hergestellt werden. Daneben enthalten die Dispersionen noch das Sulfonsäuregruppen tragende Polymerisat in Form der in Wasser löslichen Salze. Die Mikrokapseln sind Einzelkapseln. Durch geeignete Bedingungen bei der Dispergierung können Kapseln mit Durchmessern im Bereich von 1 bis zu 200 µm und größer hergestellt werden. Besonders vorteilhaft ist die sehr enge Größenverteilung der Kapseln. Dies gilt auch für den Bereich von 1 bis etwa 8 µm, der für die Herstellung von druckempfindlichen Aufzeichnungssystemen und Reaktionsdurchschreibepapieren besonders geeignet ist. Die nach dem erfindungsgemäßen Verfahren erhaltenen Kapseln sind hervorragend dicht und enthalten das gesamte Kernmaterial, z. B. den Farbbildner eingekapselt. Daher sind die nach dem Verfahren gemäß der vorliegenden Erfindung erhaltenen Kapseln auch für die Herstellung von sog. Zweischichtenpapieren (»self-contained papers«) geeignet, bei denen der Farbbildner in Kapseln und der zur Farbbildung benötigte Elektronenacceptor übereinander oder als Gemisch auf der Papieroberfläche aufgebracht sind.

Die Kapseldispersionen sind trotz der hohen Konzentration an Kapseln und des hohen Molekulargewichts der wasserlöslichen, Sulfonsäuregruppen enthaltenden Polymeren sehr niederviskos und deshalb auch durch Maschensiebe von 25 bis 40 µm Maschenweite gut filtrierbar. Bei der Filtration zeigt sich, daß die Ausbeute an Mikrokapseln bei dem erfindungsgemäßen Verfahren sehr hoch ist und in den meisten Fällen mehr als 98% beträgt.

Die Viskosität der Mikrokapseldispersion hängt weniger vom Feststoffgehalt als vielmehr von den Bedingungen ab, unter denen die Polykondensation (Polymerisation) erfolgt. Die erhaltenen Kapseldispersionen weisen eine Viskosität zwischen 100 und 400 mPas auf. In einzelnen Fällen kann die Viskosität durch niedrigere pH-Werte und höhere Temperatur bei der Polykondensation u. U. auch noch in der Phase der Auskondensation erniedrigt werden.

Bei Kapseln, deren Kernmaterial eine Dichte von ca. 1 aufweist, sind die Kapseldispersionen trotz der niedrigen Viskosität sehr stabil. Ein Absetzen der Mikrokapseln, insbesondere durch langes Lagern, kann durch Zusätze von vernetzte Acrylsäure enthaltenden Copolymerisaten verhindert werden (DE-C-2 217 696).

Das Verfahren gemäß der Erfindung wird im allgemeinen so durchgeführt, daß man das einzukapselnde Kernmaterial in einer wäßrigen Lösung des wasserlöslichen Sulfonsäuregruppen tragenden Polymeren, die einen pH von 3 bis 6,5 aufweist, zu feinen Tröpfchen emulgiert, wobei die Tropfengröße je nach dem vorgesehenen Anwendungszweck eingestellt werden kann. Zu der vorgelegten Emulsion wird bei Temperaturen zwischen 20 und 100°C unter Durchmischen die wäßrige Lösung des Melamin-Formaldehyd-Vorkondensates und/oder dessen Methyläthern kontinuierlich oder in Portionen in dem Maße zugegeben, wie die Kondensation erfolgt. Dabei ist die Geschwindigkeit der Zugabe von der Temperatur und/oder dem pH-Wert in der wäßrigen Emulsion abhängig. Je höher die Temperatur, bzw. je niedriger der pH-Wert in der Emulsion, umso rascher kann das Vorkondensat zugesetzt werden. Nach Beendigung der Zugabe wird die Kondensation dann zu Ende geführt. Dabei wurde festgestellt, daß die optimale Kondensation der verschiedenen Vorkondensate bei etwas unterschiedlichen pH-Werten und Temperaturen erfolgt. Diese optimalen Bedingungen können durch einfache Reihenversuche leicht ermittelt werden.

Für das Verfahren der vorliegenden Erfindung ist entscheidend, daß die Bildung der Kapselwände in Gegenwart der gelösten Sulfonsäuregruppen tragenden Polymeren als Polyelektrolyten erfolgt. Die Polymeren müssen einen K-Wert nach Fikentscher von 100 bis 170 (gemessen in wäßriger Lösung) oder eine Viskosität von 200 bis 5000 mPas bei einem Schergefälle von 489 $s^{-1}$ (gemessen bei 25°C in 20gew.-%iger wäßriger Lösung bei pH 4,0 bis 7,0) aufweisen. Bevorzugt sind Polymere mit einem K-Wert von 115 bis 160 oder deren Viskosität 400 bis 4000 mPas beträgt.

Je höher das Molgewicht, bzw. der K-Wert des verwendeten wasserlöslichen Polymeren, umso kleiner werden die Kapseln, je langsamer die Kondensation im Moment der Ausfällung des Harzes erfolgt, umso enger ist die Teilchengrößenverteilung der erhaltenen Kapseln. Bei den erfindungsgemäß zu verwendenden Sulfonsäuregruppen tragenden Polymeren tritt praktisch keine Agglomeration der gebildeten Mikrokapseln auf. Agglomerate von Mikrokapseln können in Gegenwart der Sulfonsäuregruppen enthaltenden wasserlöslichen Polymere gebildet werden, wenn zuwenig an wasserlöslichem Polymeren angewendet wurde. Durch Erhöhung der Menge an dem wasserlöslichen Polymeren kann dieser nachteilige Effekt behoben werden. Agglomerate können auch gebildet werden, wenn zuviel Polymeres oder ein Polymeres mit zu hohem Molekulargewicht (d. h. K-Wert größer als 170) verwendet wird. In diesen Fällen ist die Viskosität in der Emulsion so hoch, daß das Gemisch von der Dispergiereinrichtung nicht mehr ausreichend durchmischt wird und das Gemisch deshalb geliert. Die Gelierung kann zwar verhindert werden, wenn das Gemisch z. B. durch einen zusätzlichen Rührer durchmischt wird, die Zugabe des Vorkondensates vermindert und/oder die Kondensationsgeschwindigkeit verringert, der pH-Wert erhöht und/oder die Temperatur gesenkt wird, jedoch erhält man kein optimales Ergebnis. Zweckmäßigerweise wird man jedoch ein wasserlösliches Polymeres mit einem weniger hohen Molekulargewicht verwenden.

Verwendet man wasserlösliche Sulfonsäuregruppen enthaltende Polymere mit zu niedrigem K-Wert, dann reicht die stabilisierende Wirkung des Polymeren auch bei höherer Konzentration nicht aus, so daß das Gemisch koaguliert, bzw. geliert.

Weiterhin wurde gefunden, daß in Gegenwart von Polymeren mit einem höheren Gehalt an Sulfonsäuregruppen etwas dichtere Mikrokapseln erhalten werden als in Gegenwart von Polymeren mit einem niedrigeren Gehalt an diesen Gruppen.

Als wasserlösliche Sulfongruppen tragende Polymere kommen z. B. Polymerisate des Sulfoäthyl(meth)acrylats, des Sulfopropyl(meth)acrylats, Maleinimid-N-äthansulfonsäure, 2-Acrylamido-2-methylpropansulfonsäure allein als Homopolymerisate oder im Gemisch miteinander als Copolymerisate in Betracht. Bevorzugt sind Polymere der 2-Acrylamido-2-methylpropansulfonsäure, da in deren Gegenwart Mikrokapseln mit sehr guten Eigenschaften gebildet werden. 2-Acrylamido-2-methyl-propansulfonsäure hat noch den Vorteil, daß diese sich leicht zu Polymeren mit gewünschten K-Werten polymerisieren läßt. Die Polymere liegen in Form der freien Säure oder vorzugsweise in Form der Alkalimetallsalze vor. Als Sulfonsäuregruppen tragende Polymere kommen außerdem Copolymere in Betracht, die aus den genannten Sulfogruppen tragenden Monomeren oder Vinylsulfonsäure und $C_1$- bis $C_3$-Alkylacrylaten, Hydroxy-$C_2$- bis $C_4$-alkylacrylaten wie Methyl-, Äthyl-, n- oder i-Propylacrylat, Hydroxypropylacrylat und/oder N-Vinylpyrrolidon aufgebaut sind. Im Falle der Acrylate beträgt deren Anteil im Copolymerisat maximal 30 Gew.-%. Im Falle der Hydroxyalkylacrylate sollte deren Anteil nicht größer als 10 Gew.-%, bezogen auf die Summe der Comonomeren sein. Bei Copolymerisaten mit N-Vinylpyrrolidon liegt der Anteil an Sulfonsäuregruppen tragenden Monomeren bei mindestens 5, vorzugsweise bei 30 Gew.-% und darüber (bezogen auf die Summe der Comonomeren). Von den Copolymerisaten sind solche mit 2-Acrylamido-2-methyl-propansulfonsäure [$H_2C = CH - CO - NH - C(CH_3)_2 - CH_2 - SO_3H$] als sulfonsäuregruppentragende Comonomeren bevorzugt.

Die sulfonsäuregruppen tragenden Homo- und Copolymerisate werden nach bekannten Verfahren hergestellt.

Die Anwendungsmenge an dem wasserlöslichen, Sulfogruppen enthaltenden Polymeren liegt in der Regel zwischen 1 und 5,5, vorzugsweise zwischen 1,5 und 4,5 Gew.-%, bezogen auf die wäßrige Phase. Die optimale Menge an dem wasserlöslichen Sulfonsäuregruppen tragenden Polymeren wird einmal vom Polymeren selbst, zum anderen von der Reaktionstemperatur, der gewünschten Mikrokapselgröße und dem Vorkondensat aus Melamin und Formaldehyd beeinflußt. Durch einfache Reihenversuche kann die optimal benötigte Menge an dem wasserlöslichen Polymeren leicht ermittelt werden. Es hat sich herausgestellt, daß die optimale Konzentration des wasserlöslichen, Sulfonatgruppen aufweisenden Polymeren praktisch unabhängig ist vom Verhältnis der wäßrigen kontinuierlichen Phase zur organischen, wasserunlöslichen Kernmaterialphase. Das heißt unter den einmal optimierten Bedingungen können Mikrokapseldispersionen mit variablen Gehalten an Kapseln bei praktisch gleichbleibender Qualität hergestellt werden.

Ein weiterer Vorteil der sulfonsäuregruppen tragenden, wasserlöslichen Polymeren liegt darin, daß die Sulfonsäure-, bzw. die Sulfonatgruppen bei dem in Betracht kommenden pH-Bereich vollständig dissoziiert sind und deshalb die Lösungen bei pH-Änderungen keine Änderung in der Viskosität zeigen.

Als Ausgangsstoffe für das Wandmaterial eignen sich Melamin-Formaldehyd-Vorkondensate und/oder deren Methyläther, mit einem Verhältnis von Melamin : Formaldehyd von 1 : 1,5 bis 1 : 6, vorzugsweise 1 : 3 bis 1 : 6. Diese Vorkondensate sind N-Methylolmelaminverbindungen oder deren Methyläther. Die für das erfindungsgemäße Verfahren verwendeten Vorkondensate müssen in Wasser in jedem Verhältnis mischbar sein, ohne eine Trübung zu erzeugen. Aus diesen Gründen sind die Äther der Methylolmelamine besonders bevorzugt. Die Herstellung der Ausgangsstoffe ist bekannt. Die Auskondensation der Vorkondensate erfolgt bei pH-Werten von 3,0 bis 6,5, vorzugsweise von 3,8 bis 5,5. Der pH-Wert in der wäßrigen Phase kann mit Säuren, vorzugsweise mit Ameisensäure oder in zu saurer wäßriger Phase mit Natronlauge eingestellt werden. Die Art der Ausfällung des Melamin-Formaldehyd-Kondensates ist etwas vom Vorkondensat abhängig, so daß es für die Bildung der Mikrokapseln aus den verschiedenen Vorkondensaten etwas unterschiedliche optimale pH-Werte und/oder Temperaturen gibt.

Als Kernmaterial kommen für die Mikrokapseln flüssige, feste oder gasförmige, in Wasser unlösliche bis im wesentlichen unlösliche Stoffe in Betracht, z. B. sind zu nennen: Flüssigkeiten wie Alkylnaphthaline, partiell hydrierte Terphenyle, aromatische Kohlenwasserstoffe wie Xylol, Toluol, Dodecylbenzol, aliphatische Kohlenwasserstoffe, wie Benzin und Mineralöl, Chlorparaffine, Fluorkohlenwasserstoffe, natürliche Öle wie Erdnußöl, Sojaöl, außerdem Klebstoffe, Aromastoffe, Parfümöle, Monomere wie Acryl- oder Methacrylsäureester, Styrol, Wirkstoffe wie Pflanzenschutzmittel, roter Phosphor, anorganische und organische Pigmente, z. B. Eisenoxidpigmente; außerdem Lösungen oder Suspensionen von Farbstoffen und vor allem von Farbbildnern und Pigmenten in Kohlenwasserstoffen wie Alkylnaphthalinen, partiell hydriertem Terphenyl, Dodecylbenzol und anderen hochsiedenden Flüssigkeiten.

Die Dispergierung des Kernmaterials erfolgt je nach der Größe der herzustellenden Kapseln in bekannter Weise. Für die Herstellung großer Kapseln reicht die Dispergierung unter Verwendung von wirksamen Rührern, insbesondere von Propeller- oder Impellerrührern aus. Kleine Kapseln, insbesondere wenn die Größe unterhalb von 50 μm liegen soll, erfordern Homogenisier- oder Dispergiermaschinen, wobei diese Geräte mit oder ohne Zwangsdurchlaufvorrichtung versehen sein können.

Die Kapselgröße kann über die Tourenzahl des Dispergiergerätes/Homogenisiergerätes und/oder mit Hilfe der Konzentration des Sulfonsäuregruppen tragenden Polymeren bzw. über dessen Molekulargewicht, d. h. über die Viskosität der wäßrigen kontinuierlichen Phase innerhalb gewisser Grenzen gesteuert werden. Dabei nimmt mit Erhöhung der Tourenzahl bis zu einer Grenztourenzahl die Größe der dispergierten Teilchen ab. Mit steigender Viskosität der wäßrigen Phase oder mit fallender Viskosität des Kernmaterials nimmt in der Regel die Tröpfchengröße und damit die Größe der Kapseln ab.

Weiterhin hat auch die Zusammensetzung des Sulfonsäuregruppen tragenden Polymeren einen Einfluß auf die Teilchengröße. So erhält man in Gegenwart von Sulfonsäuregruppen tragenden Copolymerisaten mit Äthyl-, Methyl- oder Hydroxypropylacrylat kleinere Tröpfchen und damit kleinere Kapseln als mit dem entsprechenden Sulfonsäuregruppen tragenden Homopolymeren.

Dabei ist es wichtig, daß die Dispergiergeräte zu Beginn der Kapselbildung angewendet werden.

Bei kontinuierlich arbeitenden Geräten mit Zwangsdurchlauf ist es vorteilhaft, die Emulsion mehrmals durch das Scherfeld zu schicken. Wenn die dispergierten Tröpfchen vom Wandmaterial umhüllt sind, erfolgt die Aushärtung der Kapseln vorteilhafterweise unter Rühren mit normalen Rührern wie Ankerrührer, Propeller- oder Impellerrührer. Es besteht sonst die Gefahr, daß — dies gilt vor allem für größere Kapseln — diese im Scherfeld wegen der hohen Scherenergie aufgebrochen werden und daß — da kein Vorkondensat mehr vorhanden ist — die Löcher nicht mehr geschlossen werden. Die Folge ist außen auf den Kapseln sitzendes Kernmaterial, das z. B. bei Farbbildnerlösungen zur Anfärbung von Durchschreibepapieren führen würde.

Die Kapselbildung und die Kapselgröße kann leicht unter dem Mikroskop kontrolliert werden. Die noch nicht verkapselten Öltröpfchen laufen unter dem Deckglas auf dem Objektträger rasch zusammen. Sind die Tröpfchen stabil, hat sich bereits eine feste Wand um diese herum abgeschieden.

Bei sehr feinen Tröpfchen kann der Abschluß der Wandbildung auch daran erkannt werden, daß die mit dem Zugeben des Melamin-Formaldehyd-Vorkondensates grobteilig und braun gewordene Emulsion wieder feinteilig und farblos wird. Diese Änderungen können sehr gut mit einer Trübungsmeßsonde kontrolliert werden.

Unter optimalen Verfahrensbedingungen tritt bei der Kapselbildung keine vorübergehende Verdickung der Kapseldispersion auf.

Die für den Einzelfall optimalen Bedingungen, wie Temperatur, pH, Rührer und die Zulaufgeschwindigkeit des Vorkondensates können anhand von einigen Versuchen leicht ermittelt werden.

Die nach dem Verfahren erhaltenen Kapseln enthalten noch restlichen, freien Formaldehyd, der bei der Weiterverarbeitung stören kann. Der Rest Formaldehyd kann durch Zugabe von z. B. 10 bis 100 Gew.-%, berechnet auf das verwendete Vorkondensat, an Äthylenharnstoff und/oder Melamin und Halten bei 20 bis 100°C bei pH 3 bis 10 gebunden werden. Vorteilhafterweise wird man die Entfernung unmittelbar im Anschluß an die Auskondensation (Härtung) durchführen.

Das erfindungsgemäße Verfahren soll durch die folgenden Ausführungsbeispiele weiter erläutert werden. Im folgenden beziehen sich die Teile und Prozente auf das Gewicht. Dabei sind die Prozentangaben ihrerseits auf das Gewicht der Lösung oder Dispersion bezogen. Der in den Beispielen angegebene Feststoffgehalt setzt sich aus den Mikrokapseln und dem wasserlöslichen Polymeren zusammen.

Die Viskosität der Kapseldispersion wurde mit dem Brookfield-Viskosimeter, die Viskosität der Lösung der wasserlöslichen, Sulfonsäuregruppen enthaltenden Polymeren an 20gew.-%igen wäßrigen Lösungen bei 25°C im ®Rheomat 30 bei einem Schergefälle von 489 s$^{-1}$ gemessen. Der K-Wert wurde nach Fikentscher (Cellulosechemie 13 (1932) 58 ff.), 1%ig in Wasser bestimmt. Die Angaben des Siebrückstandes und die Angaben über einen Wandbelag beziehen sich — wenn nichts anderes angegeben ist — auf den trockenen Rückstand, bzw. trockenen Belag.

Die nach den Ausführungsbeispielen erhaltenen Mikrokapseln wurden in folgender Weise auf Dichtigkeit und gegebenenfalls auf Intensität der Durchschrift geprüft:

I. Prüfung auf Dichtigkeit und Intensität der Durchschrift

Die Mikrokapseldispersion wurde mit Wasser auf 16,5% verdünnt und mit einer Drahtrakel

α) auf ein normales Schreibmaschinenpapier und
β) auf ein mit aktivem Clay beschichtetes Blatt (CF-Blatt) eines Reaktionsdurchschreibepapieres gestrichen und die Papiere getrocknet. Auftragsmenge: 5 g Mikrokapseln/m² Papieroberfläche.

Im Falle von Mikrokapseldispersionen, die Teilchen >10 μm enthalten, wurden diese mit einem Haarpinsel oder einer Kastenrakel aufgetragen.

a) Prüfung auf Dichtigkeit

Die nach β) auf das CF-Blatt gestrichenen Mikrokapseln geben nach Trocknen eine mehr oder minder geringe Anfärbung der Clayschicht auf dem Papier, die durch nicht eingekapselten Farbbildner verursacht wird. Man kann den außerhalb der Mikrokapseln sitzenden Farbbildner sofort auf dem CF-Blatt in den Farbstoff überführen, wenn man das mit den Kapseln beschichtete Papier z. B. mit Dodecylbenzol besprüht und trocknet. Die Färbung der so behandelten CF-Blätter wurde als Differenz der Reflexion des nicht besprühten Blattes und des besprühten Blattes in einem Reflexionsphotometer (®ELREPHO, Fa. Zeiss) gemessen und in relativen Einheiten in % angegeben, wobei die Reflexion des nicht besprühten Blattes gleich 100 gesetzt wurde. Die gemessene Färbung wird als JCF bezeichnet und in % angegeben.

### b) Intensität der Durchschrift

Das nach α) beschichtete Blatt wurde mit der beschichteten Seite auf ein CF-Blatt und dann darüber 7 Lagen Papier von ca. 38 g/m² gelegt. Dieser Stapel wurde in eine elektrische Schreibmaschine eingespannt und mit der größten Anschlagstärke ein Feld von 4,2 × 3,4 cm mit den Buchstaben kleines w beschrieben, wobei die Buchstaben in der Zeile unmittelbar aneinandergereiht und die Zeilen dicht übereinander angeordnet sind. Die Intensität (JD) der erhaltenen achten Durchschrift wurde als Differenz der Reflexion des unbeschriebenen und des beschriebenen CF-Blattes in einem Reflexionsphotometer (®Elrepho, Fa. Zeiss) gemessen und in relativen Einheiten in % angegeben, wobei die Reflexion des unbeschriebenen Blattes gleich 100 gesetzt wurde.

### Beispiel 1

1.1 In einem zylindrisch geformten 4-l-Rührgefäß mit einem eingebauten Dispergator (®Turrax 45 N, der Fa. Jahnke & Kunkel) werden 908 g Wasser und 200 g einer 20%igen Lösung von Poly-2-acrylamido-2-methylpropansulfonsäure/Natriumsalz (Viskosität: 770 mPas, K-Wert: 123) gemischt (= kontinuierliche wäßrige Phase), die Mischung mit Ameisensäure auf pH 4,5 gestellt und auf 60°C erhitzt. In der wäßrigen Lösung werden dann bei einer Umdrehungsgeschwindigkeit von 8000 Upm 800 g partiell hydriertes Terphenyl, das 28,5 g Kristallviolettlacton und 9,5 g N-Benzoylleukomethylenblau gelöst enthält, dispergiert. Zu der erhaltenen stabilen, farblosen Dispersion wird dann innerhalb von 60 min gleichmäßig eine auf pH 4,5 gestellte Lösung aus 120 g eines in Wasser klarlöslichen, partiell methylierten Vorkondensates (enthält ca. 2,3 $CH_3O$-Gruppen pro Melaminmolekül) aus 1 Mol Melamin und 5,25 Mol Formaldehyd in 132 g Wasser bei 60°C zugegeben. Nach ca. 30 min konnte in einer Probe unter dem Mikroskop die Kapselbildung festgestellt werden: die Emulsionströpfchen liefen auf dem Objektträger nicht mehr zusammen. Nach insgesamt 65 min wird die entstandene Mikrokapseldispersion mit einem Propellerrührer (500 Upm) bei 60°C noch 3,5 h nachgerührt. Die Dispersion wird dann abgekühlt, auf pH 7,0 eingestellt und über ein Sieb von 40 μ Maschenweite gesiebt, wobei ein Rückstand von ca. 0,7 g Feststoff anfällt. Bereits nach 120 min (ab Beginn der Zugabe des Vorkondensates) sind die Kapseln soweit ausgehärtet, daß ein Aufstrich der Dispersion auf einer mit Kieselgel beschichteten Dünnschichtchromatographieplatte nach dem Trocknen keine Blaufärbung mehr gibt.

Die erhaltene Dispersion ist farblos milchig und enthält nach der mikroskopischen Beurteilung Einzelkapseln von vorwiegend 2 bis 5 μm Durchmesser. Im Coulter-Counter TF gemessen ist die häufigste Teilchengröße (Zahlenmittel) 3,5 μm bei einer Halbwertsbreite von 1,5 bis 5 μm. Der größte Teilchendurchmesser beträgt 8 μm. Die Viskosität beträgt 140 mPas (gemessen im Brookfieldviskosimeter). Feststoffgehalt: 42,8%. Die Dispersion riecht nach Formaldehyd.

Die erhaltenen Mikrokapseln wurden nach I auf Dichtigkeit und Intensität der Durchschrift geprüft: Die Dichtigkeitsprüfung nach Ia) ergab einen JCF-Wert von 0% und die Intensitätsprüfung nach Ib) einen JD-Wert von 52%.

1.2 Es wird eine Mikrokapseldispersion nach 1.1 hergestellt. Der auf pH 7 gestellten Dispersion werden 21,6 g Äthylenharnstoff in 25 g Wasser zugegeben und diese Mischung 24 Stunden bei Raumtemperatur langsam gerührt. Der Formaldehydgeruch ist verschwunden. Die Dispersion hat praktisch die gleichen anwendungstechnischen Eigenschaften wie die nach 1.1 erhaltene:

| | |
|---|---|
| Siebrückstand: | 0,8 g |
| Kapseldurchmesser: | 2 – 5 μm |
| Viskosität: | 113 mPas |
| JD-Wert nach Ib): | 54% |
| JCF-Wert nach Ia): | 0% |

1.3 Es wird eine Mikrokapseldispersion nach 1.1 hergestellt. Der 60°C warmen Dispersion werden bei pH 4,5 eine Suspension von 96,3 g Melamin in 120 g Wasser unter heftigem Durchmischen zugegeben. Nach 30 min ist der Formaldehydgeruch verschwunden. Die Dispersion wird gekühlt, neutralisiert und gesiebt.

| | |
|---|---|
| Siebrückstand: | 1 g |
| Kapseldurchmesser: | 2 – 5 μm |
| Viskosität: | 123 mPas |
| JD-Wert nach Ib): | 38% |
| JCF-Wert nach Ia): | 0% |

Der im Vergleich zu 1.1 und 1.2 geringere JD-Wert hat seine Ursache in der durch die zusätzliche Menge Melamin erfolgte Verdickung der Kapselwand.

7

0 026 914

## Beispiel 2

Man arbeitet nach den Angaben in Beispiel 1, jedoch wird der pH-Wert in der wäßrigen Lösung und in der Lösung des Melamin-Formaldehyd-Vorkondensates auf 4,0 eingestellt und die Lösung des Melamin-Formaldehyd-Vorkondensates innerhalb 30 min gleichmäßig zu der Emulsion gegeben. Nach 14 min waren die Tröpfchen bereits mit einer Wand umgeben. 5 min nach dem Zugeben des Vorkondensates wird die Dispersion nur noch mit einem Propellerrührer gerührt. Bereits 60 min nach Beginn der Zugabe des Vorkondensates färbte die Mikrokapseldispersion Kieselgel nicht mehr an. Nach insgesamt 4 h wurde die Dispersion auf Raumtemperatur gekühlt und über ein Sieb mit 40 µm Maschenweite gesiebt (0,7 g Rückstand). Feststoffgehalt: 42,4%.

Die erhaltene Dispersion ist milchig und hat eine Viskosität von 164 mPas. Die Dispersion besteht aus einzelnen Mikrokapseln von vorwiegend 2 bis 4 µm Durchmesser. Im Coulter Counter TF ergab sich als häufigster Durchmesser 3 µm, bei einer Halbwertsbreite von 1,2 bis 4,9 µm. Die Prüfung auf Papier ergab (Ib) einen JD-Wert von 48% und nach Ia) einen JCF-Wert von 0%.

## Beispiel 3

Es wird nach den Angaben des Beispiels 1 gearbeitet, jedoch wird die wäßrige Lösung und die Lösung des Vorkondensates auf pH 5,0 eingestelit. Das Melamin-Formaldehyd-Vorkondensat wird in 105 min zur Emulsion zugegeben. Danach wird die Dispersion mit einem Propellerrührer bei 60°C weitergerührt.

Die Kapselbildung ist 65 bis 75 min nach Zulaufbeginn festzustellen. Eine nach 300 min ab Beginn der Zugabe entnommene Probe der Kapseldispersion gibt auf Kieselgel noch eine Blaufärbung. Der pH-Wert in der Dispersion wird auf 4,0 erniedrigt und die Dispersion auf 80°C erhitzt. Nach 1 Std. sind die Kapseln einwandfrei dicht. Die Dispersion wird gekühlt, neutralisiert und durch ein 40 µm Sieb gesiebt (1,2 g Siebrückstand). Feststoffgehalt: 42,5%.

Die erhaltene Dispersion ist milchig und hat eine Viskosität von 212 mPas. Der Teilchendurchmesser der Mikrokapseln liegt im wesentlichen zwischen 2 und 4 µm. Es sind keine Kapselagglomerate vorhanden. Im Coulter-Counter TF wurde ein häufigster Durchmesser von 3,5 µm mit einer Halbwertsbreite von 2,0 bis 4,6 µm gemessen. Die Prüfung auf Papier ergibt nach Ib) einen JD-Wert von 48% und nach Ia) einen JCF-Wert von 0%.

## Beispiel 4

Es wird nach den Angaben des Beispiels 1 verfahren, jedoch wird als kontinuierliche wäßrige Phase eine Mischung aus

4.1 300 g einer 20%igen Lösung von Poly-2-acrylamido-2-methyl-propansulfonsäure (Natriumsalz) (Viskosität 770 mPas; K-Wert: 123) und 970 g Wasser;

4.2 120 g einer 20%igen Lösung von Poly-2-acrylamido-2-methyl-propansulfonsäure (Natriumsalz) (Viskosität 930 mPas; K-Wert: 126) und 970 g Wasser;

4.3 60 g einer 20%igen Lösung von Poly-2-acrylamido-2-methyl-propansulfonsäure (Natriumsalz) (Viskosität: 930 mPas; K-Wert: 126) und 764 g Wasser

verwendet. Die erhaltenen Mikrokapseldispersionen sind in der folgenden Tabelle charakterisiert:

| | Beispiel | | |
|---|---|---|---|
| | 4.1 | 4.2 | 4.3 |
| Feststoffgehalt [%] | 43,8 | 42,0 | 46,9 |
| Viskosität [mPas] | 440 | 158 | 40 |
| Siebrückstand [g] | 3,0 | 0,8 | 0,7 |
| Kapseldurchmesser[1]) [μm] | 2—5 | 2—4 | 3—7 |
| Häufigster Kapseldurchmesser[2]) [μm] | 2,8 | 2,0 | 4,8 |
| JD-Wert nach lb) [%] | 45 | 48 | 48 |
| JCF-Wert nach la) [%] | 0 | 0 | 1 |

[1]) Gemessen unter dem Mikroskop.
[2]) Bestimmt mit dem Coulter Counter TF.

### Beispiel 5

Es wird nach den Angaben in Beispiel 1 gearbeitet, jedoch wird als kontinuierliche wäßrige Phase eine Mischung aus

5.1  200 g einer 20%igen Lösung von Poly-2-acrylamido-2-methyl-propansulfonsäure/Natriumsalz (Viskosität: 424 mPas; K-Wert: 114) und 908 g Wasser
5.2  120 g einer 20%igen Lösung von Poly-2-acrylamido-2-methyl-propansulfonsäure/Natriumsalz (Viskosität: 2200 mPas; K-Wert: 160) und 927 g Wasser

verwendet. Beim Beispiel 5.2 erfolgte die Dispergierung des Kernmaterials mit 10.000 Upm. Die erhaltenen Mikrokapseldispersionen sind in der folgenden Tabelle charakterisiert:

| | Beispiel | |
|---|---|---|
| | 5.1 | 5.2 |
| Feststoffgehalt [%] | 42,0 | 42,6 |
| Viskosität [mPas] | 131 | 596 |
| Siebrückstand [g] | 5 | 0,7 |
| Mittlerer Kapseldurchmesser[1]) [μm] | 3—6 | 1—2 |
| Häufigster Kapseldurchmesser[2]) [μm] | 4,6 | 2,4 |
| JD-Wert nach lb) [%] | 46 | 50 |
| JCF-Wert nach la) [%] | 0 | 3 |

[1]) Gemessen unter dem Mikroskop.
[2]) Bestimmt mit dem Coulter Counter TF.

### Beispiel 6

In der im Beispiel 1 beschriebenen Apparatur werden 120 g einer 20%igen Lösung der Poly-2-acrylamido-2-methyl-propansulfonsäure/Natriumsalz (Viskosität: 930 mPas; K-Wert: 126) und 650 g Wasser vorgelegt, mit Ameisensäure auf pH 4,5 eingestellt und auf 60°C erhitzt. Dann wird eine Lösung von 9,3 g 3'-Phenyl-7-N-dimethylspirodibenzopyran, 22,65 g 2,6-Diphenyl-4-(4'-dimethylamino-

phenyl)-pyridin, 9,35 g 3-Dibutylamino-5-diäthylamino-2,4-diazarhodaminlakton, 6,13 g N-Benzoylleukomethylenblau und 0,40 g Kristallviolettlakton in 749,53 g Dodecylbenzol bei 8000 Upm in der wäßrigen Lösung emulgiert. Zu dieser Emulsion läßt man bei unveränderter Tourenzahl in 60 min gleichmäßig eine auf pH 4,5 eingestellte Lösung von 120 g eines partiell methylierten Vorkondensates (enthält ca. 2,3 $CH_3O$-Gruppen je Melaminmolekül) aus 1 Mol Melamin und 5,25 Mol Formaldehyd in 132 g Wasser bei 60°C zulaufen. 5 min nach beendeter Zugabe wird die Mikrokapseldispersion mit einem Propellerrührer (500 Upm) noch 4,5 h bei 60°C weitergerührt. Die Dispersion wird gekühlt, neutralisiert und gesiebt (40 μm Maschenweite, 0,8 g Siebrückstand). Feststoffgehalt: 49,6%.

Bereits 40 min nach der Zugabe des Vorkondensates gibt eine verdünnte Probe auf Kieselgel keine Färbung mehr.

Die farblose Mikrokapseldispersion hat eine Viskosität von 355 mPas. Die Kapseln haben einen Durchmesser zwischen 2 und 5 μm. Die Prüfung nach Ib) auf Papier ergibt eine schwarze Durchschrift mit einem JD-Wert von 52%. Der JCF-Wert beträgt 3%.

### Beispiel 7

Es wird die in Beispiel 1 beschriebene Apparatur verwendet. 940 g Wasser werden zusammen mit 160 g einer 20%igen Lösung von Poly-2-acrylamido-2-methyl-propansulfonsäure/Natriumsalz (Viskosität: 880 mPas; K-Wert: 129) vorgelegt, auf 60°C geheizt und mit Ameisensäure auf pH 4,5 eingestellt. In der wäßrigen Phase wird dann eine Lösung von 28 g 3'-Methyl-7-morpholinyl-2,2'-spirodi(2H1-benzo-pyran) in 772 g partiell hydriertem Terphenyl einemulgiert. Zu dieser Emulsion wird bei 60°C in 60 min eine vorher auf pH 4,5 eingestellte Lösung aus 120,4 g eines mit Wasser unendlich verdünnbaren Vorkondensats aus 1 Mol Melamin und 3,9 Mol Formaldehyd, das partiell mit Methanol veräthert ist (ca. 2,4 $CH_3O$-Gruppen je Melaminmolekül), in 132 g Wasser zugefahren. 5 min nach der Zugabe wird die Dispersion mit einem Propellerrührer (500 Upm) 4 h bei 60°C weitergerührt und ausgehärtet. Nach dem Abkühlen, Sieben (ca. 8 g Rückstand) und Neutralisieren liegt eine 42,8%ige Kapseldispersion vor, die eine Viskosität von 34 mPas hat und die Kapseln vom Durchmesser von 3 bis 6 μm enthält.

Die Prüfung auf Papier nach Ib) ergab eine intensiv blaue Durchschrift mit einem JD-Wert der achten Durchschrift von 60% und nach Ia) einem JCF-Wert von 1%.

### Beispiel 8

Es wird wie im Beispiel 7 angegeben, jedoch mit folgenden Änderungen gearbeitet:

1)  Der pH-Wert in der wäßrigen kontinuierlichen Phase und der Lösung des Vorkondensats wird auf 5,0 gestellt,
2)  die Kondensation erfolgt bei 80°C und
3)  die Menge an Vorkondensat wird auf 361 g, die des Wassers auf 235 g erhöht und diese Menge in einer Stunde zu der Emulsion gegeben.

Man erhält eine wäßrige Dispersion mit einer Viskosität von 92 mPas und einem Feststoffgehalt von 44,7% (Siebrückstand 0,7 g). Die Kapseln haben einen Durchmesser von 2 bis 12 μm. Die Kapseln lieferten nach Ib) eine blaue Durchschrift mit einem JD-Wert von 40% und nach Ia) einen JCF-Wert von 1%. Der JD-Wert ist geringer als bei den nach den Beispielen 1 bis 7 erhaltenen Kapseln, da die Kapseln des Beispiels 8 wegen der erhöhten Dicke der Kapselwand schwerer zerstörbar sind.

### Beispiel 9

Es wird nach den Angaben des Beispiels 1, jedoch mit folgenden Abänderungen gearbeitet:

1)  Als wäßrige kontinuierliche Phase wird eine Mischung aus 160 g einer 20%igen Lösung von Poly-2-acrylamido-2-methyl-propansulfonsäure/Natriumsalz (K-Wert: 129; Viskosität: 880 mPas) und 940 g Wasser verwendet;
2)  als wasserlösliches Vorkondensat werden 118,8 g eines Kondensats aus Melamin und Formaldehyd im Verhältnis 1 : 6, das mit Methanol teilweise veräthert ist (enthält ca. 4 $CH_3O$-Gruppen je Melaminmolekül), in Form einer wäßrigen Lösung, die vorher auf pH 4,5 eingestellt worden ist, verwendet;
3)  die Dispergierung des Kernmaterials erfolgt mit 10 000 Upm.

Nach dem Abkühlen, Neutralisieren und Sieben (ca. 0,8 g Rückstand) liegt eine 42,7%ige Kapseldispersion mit einer Viskosität von 199 mPas vor, die Kapseln mit einem Durchmesser von 2 bis 5 μm enthält.

Die Prüfung auf Papier ergab nach Ib) eine blaue Durchschrift mit einem JD-Wert von 54% und nach Ia) einem JCF-Wert von 1%.

## Beispiel 10

Es wird nach den Angaben des Beispiels 1 mit folgenden Abänderungen gearbeitet:

1) Die wäßrige kontinuierliche Phase enthält die gleiche Menge einer Poly-2-acrylamido-2-methyl-propansulfonsäure/Natriumsalz mit einer Viskosität von 880 mPas und einem K-Wert von 129;
2) die Kondensation erfolgt bei pH 5,5 und
3) die Reaktionstemperatur ist 90°C.

Nach dem Abkühlen, Neutralisieren und Sieben (40 μm Maschenweite) (0,7 g Rückstand) erhält man eine 45,5%ige Kapseldispersion mit einer Viskosität von 507 mPas. Die Kapseln haben einen Durchmesser von 3 bis 8 μm, wobei einige wenige Kapselzwillinge und -drillinge gefunden wurden.
Die Prüfung auf Papier ergab nach Ib) einen JD-Wert von 51% und nach Ia) einen JCF-Wert von 1%.

## Beispiel 11

Es wird nach den Angaben des Beispiels 1, jedoch mit folgenden Änderungen gearbeitet:

1) Die wäßrige kontinuierliche Phase wird durch Mischen von 630 g Wasser mit 200 g einer 20%igen Lösung von Poly-2-acrylamido-2-methyl-propansulfonsäure/Natriumsalz, das einen K-Wert von 129 und eine Viskosität von 880 mPas aufweist, erhalten;
2) der pH-Wert wird auf 5,0 eingestellt und
3) die Temperatur bei 80°C gehalten.

Man erhält eine Kapseldispersion, die nach dem Neutralisieren und Sieben (ca. 0,8 g Rückstand) einen Feststoffgehalt von 54,3% und eine Viskosität von 540 mPas aufweist. Die Prüfung auf Papier nach Ib) ergibt einen JD-Wert von 52% und nach Ia) einen JCF-Wert von 0%.

## Beispiel 12

Es wird die in Beispiel 1 beschriebene Apparatur verwendet. In dem Rührgefäß werden 120 g der in Beispiel 1 angegebenen Lösung der Poly-2-acrylamido-2-methylpropansulfonsäure/Natriumsalz und 940 g Wasser gemischt, auf pH 5,0 eingestellt und in dieser Lösung bei 80°C 800 g der in Beispiel 1 angegebenen Lösung der Farbbildner emulgiert. Zunächst wird in 60 min eine Lösung, die 40,6 g eines partiell methylierten Melamin-Formaldehydkondensats (Molverhältnis 1 : 3,9, ≈2,4 CH$_3$O-Gruppen je Melaminmolekül) in 97,4 g Wasser enthält, zugegeben. 5 min nach dem Zugeben wird die Dispersion nur noch mit einem Propellerrührer (500 Upm) bei 80°C gerührt. Nach 25 min werden über eine Stunde kontinuierlich weitere 241 g des vorstehend angegebenen Vorkondensats in 183 g Wasser zugegeben. Die Kapseln werden durch 3stündiges Rühren bei 80°C ausgehärtet. Die Dispersion wird abgekühlt, neutralisiert und durch ein 40-μm-Sieb gesiebt (5 g Rückstand). Feststoffgehalt der Dispersion: 42,8%.
Die Dispersion hat eine Viskosität von 106 mPas und enthält Kapseln mit einem Durchmesser von 3 bis 7 μm neben sehr wenigen Agglomeraten. Der Anteil des Wandmaterials an der Kapsel beträgt ca. 26%. Die Prüfung auf Papier ergab nach Ib) einen JD-Wert von 43% und nach Ia) einen JCF-Wert von 0%. Die JD-Werte sind bei den Kapseln des vorliegenden Beispiels niedriger, da diese wegen der dickeren Wand schwerer zerstört werden.

## Beispiel 13

Es wird wie in Beispiel 12 angegeben verfahren, jedoch mit folgenden Abänderungen:

1) Die Kondensation erfolgt bei 60°C und pH 4,5 und
2) wird als Vorkondensat ein partiell methyliertes (ca. 2,3 CH$_3$O-Gruppen pro Melaminmolekül) Umsetzungsprodukt aus Melamin und Formaldehyd (1 : 5,2 Mol; ≈2,3 CH$_3$O-Gruppen je Melaminmolekül) verwendet.

Man erhält eine Mikrokapseldispersion mit einer Viskosität von 127 mPas und einem Feststoffgehalt von 42,9%. Die Durchmesser der Einzelkapseln liegen zwischen 2 und 3 μm. Die Prüfung auf Papier ergibt nach Ib) einen JD-Wert von 32% und nach Ia) einen JCF-Wert von 0%.

11

Gibt man die Gesamtmenge an Vorkondensat entsprechend Beispiel 1 in einer Stunde zu, dann erhält man eine 44,7%ige Dispersion mit einer Viskosität von 167 mPas. Beim Sieben durch ein Sieb mit 40 µm Maschenweite bleibt ein erhöhter Rückstand (12 g). Die Größe der Kapseln beträgt 3 bis 6 µm.

Die Dispersion enthält einige Agglomerate. Die Prüfung auf Papier ergab nach Ib) einen JD-Wert von 38% und nach Ia) einen JCF-Wert von 1%. Der geringere JD-Wert wird durch die dickere Wand verursacht, wodurch die Kapseln schwerer zerstörbar sind.

## Beispiel 14

Man arbeitet wie in Beispiel 13 angegeben, verwendet jedoch die gleiche Menge eines partiell methylierten Vorkondensats (enthält ≈4 CH$_3$O-Gruppen je Melaminmolekül), das durch Kondensation von Melamin und Formaldehyd (1 : 6 Mol) erhalten wurde. Die Mikrokapseldispersion mit einem Feststoffgehalt von 43,8% hat eine Viskosität von 247 mPas und enthält Einzelkapseln von 2 bis 3 µm Durchmesser. Bei der Prüfung auf Papier wurde nach Ib) ein JD-Wert von 45% und nach Ia) ein JCF-Wert von 0% gemessen

Man kann das Vorkondensat auch kontinuierlich im Verlauf von 1 Stunde zugeben. Man erhält eine Kapseldispersion mit einem Feststoffgehalt von 44,7% mit einer Viskosität von 392 mPas. Die Dispersion enthält Einzelkapseln von 1 bis 2 µm Durchmesser.

Auf Papier gaben diese Kapseln nach Ib) einen JD-Wert von 32% und nach Ia) einen JCF-Wert von 0%. Der geringere JD-Wert ist bei den vorliegenden Mikrokapseln — wie auch bei denen der Beispiele 12 und 13 — eine Folge der dickeren Kapselwand; die Kapseln werden schwerer zerstörbar.

## Beispiel 15

Man arbeitet nach den Angaben des Beispiels 1, verwendet jedoch als kontinuierliche wäßrige Phase

1) 160 g einer 20%igen Lösung eines Copolymeren aus 60% 2-Acrylamido-2-methyl-propansulfonsäure/Natriumsalz und 40% N-Vinylpyrrolidon (K-Wert: 164; Viskosität: 3330 mPas) und 908 g Wasser;

2) 160 g einer 20%igen Lösung eines Copolymeren aus 40% 2-Acrylamido-2-methyl-propansulfonsäure/Natriumsalz und 60% N-Vinylpyrrolidon (K-Wert: 157; Viskosität: 2970 mPas) und 908 g Wasser;

3) 160 g einer 20%igen Lösung eines Copolymeren aus 20% 2-Acrylamido-2-methyl-propansulfonsäure/Natriumsalz und 80% N-Vinylpyrrolidon (K-Wert: 144; Viskosität: 2030 mPas) und 908 g Wasser;

4) 160 g einer 20%igen Lösung eines Copolymeren aus 90% N-Vinylpyrrolidon und 10% Vinylsulfonsäure/Natriumsalz (K-Wert: 108; Viskosität: 1000 mPas) und 908 g Wasser.

Die Emulgierung des Kernmaterials erfolgt bei 10 000 Upm. Die erhaltenen Mikrokapseldispersionen sind in der folgenden Tabelle charakterisiert:

|  | Beispiel | | | |
|---|---|---|---|---|
|  | 15.1 | 15.2 | 15.3 | 15.4 |
| Feststoffgehalt [%] | 44 | 44,2 | 43,4 | 43,6 |
| Viskosität [mPas] | 676 | 427 | 217 | 261 |
| Siebrückstand[1]) [g] | 0,8 | 0,8 | 4 | 2,4 |
| Kapseldurchmesser[2]) [µm] | 1—4 | 2—4 | 2—5 | 2—5 |
| JD-Wert nach Ib) [%] | 51 | 55 | 53 | 52 |
| JCF-Wert nach Ia) [%] | 0 | 0 | 1 | 1 |

[1]) Sieb mit 40 µm Maschenweite.
[2]) Bestimmt unter dem Mikroskop.

**0 026 914**

Verfährt man wie oben angegeben, verwendet jedoch anstelle der angegebenen Copolymerisate ein Homopolymerisat des N-Vinylpyrrolidons (K-Wert: 90; Viskosität: 2180 mPas), dann flockt das Kondensat nach 60 min aus, und das Gemisch kann nicht mehr dispergiert werden.

Beispiel 16

Es wird wie in Beispiel 1 angegeben gearbeitet, jedoch verwendet man als kontinuierliche wäßrige Phase eine Mischung aus 908 g Wasser und 160 g einer 20%igen wäßrigen Lösung von Poly-2-acrylamido-2-methyl-propansulfonsäure/Natriumsalz (K-Wert: 129; Viskosität: 880 mPas) und dispergiert dann 400 g des im Beispiel 1 angegebenen Kernmaterials (Farbbildnerlösung). Als Vorkondensat verwendet man eine Lösung von 360 g eines partiell methylierten Hexamethylolmelamins (Melamin : Formaldehyd = 1 : 6, enthält ≈4 CH$_3$O-Gruppen je Melamin) in 160 g Wasser. Nach der Zugabe des Vorkondensats werden die Mikrokapseln 5 Stunden bei 60°C ausgehärtet. Bereits 25 min nach der Zugabe des Vorkondensats gibt eine Probe der Dispersion auf Kieselgel keine Blaufärbung mehr.

Nach dem Abkühlen, Neutralisieren und Sieben (2,4 g Rückstand) erhält man eine 35,0%ige, Feststoff enthaltende Dispersion mit einer Viskosität von 114 mPas. Die Kapseln haben einen Durchmesser von 2 bis 4 μm, einige wenige sind agglomeriert.

Auf Papier liefert die Dispersion wegen des hohen Anteils an Wandmaterial, der — bezogen auf die Kapseln — 36% ausmacht, nach Ib) einen JD-Wert von 9% und nach Ia) einen JCF-Wert von 1%.

Beispiel 17

Im folgenden Beispiel soll gezeigt werden, in welchen Konzentrationen Mikrokapseldispersionen nach dem erfindungsgemäßen Verfahren hergestellt werden können.

Es wird die in Beispiel 1 beschriebene Apparatur verwendet. Im Rührgefäß wird die in der Tabelle I angegebene kontinuierliche wäßrige Phase, welche die angegebenen Mengen der in Beispiel 1 beschriebenen Poly-2-acrylamido-2-methyl-propansulfonsäure/Natriumsalz gelöst enthält, vorgelegt, der pH-Wert auf 4,5 eingestellt und auf 60°C erwärmt. Dann wird mit dem Schnellrührer bei 8000 Upm die in der Tabelle angegebene Menge des in Beispiel 1 beschriebenen Kernmaterials (Farbbildnerlösung) in der wäßrigen Phase emulgiert und zu dieser Emulsion die in Tabelle I angegebene Menge Vorkondensat in Form einer vorher auf pH 4,5 eingestellten Lösung in 1 Stunde kontinuierlich bei 60°C zugegeben. Die erhaltenen Mikrokapseln werden anschließend bei 60°C unter Rühren mit einem Propellerrührer (500 Upm) 3,5 Stunden ausgehärtet.

Tabelle I

| Beispiel | Kontinuierliche wäßrige Phase | | | Vorkondensat[2] | | Kernmaterial |
|---|---|---|---|---|---|---|
| | Wasser | gelöstes Polymeres[1] | | | gelöst in Wasser | |
| | [g] | [g] | = [%] | [g] | [g] | [g] |
| 17.1 | 2027 | 62 | 3,0 | 60,2 | 66 | 400 |
| 17.2 | 2191 | 68 | 3,1 | 120,4 | 132 | 800 |
| 17.3 | 1068 | 40 | 3,6 | 120,4 | 132 | 800 |

[1]) Bezogen auf die wäßrige Phase.
[2]) Partiell methyliertes Vorkondensat aus Melamin/Formaldehyd (1 : 5,25 Mol).

17.4 Es wird wie in Beispiel 17.3 angegeben, jedoch mit folgenden Änderungen gearbeitet: als kontinuierliche wäßrige Phase wird eine Lösung von 10 g (=1,8%) der oben angegebenen polymeren Sulfonsäure in 540 g Wasser verwendet; die Verkapselung erfolgt bei 70°C und bei pH 4,0, und als Vorkondensat werden 132 g eines partiell methylierten Melamin-Formaldehyd-Vorkondensats (Melamin : Formaldehyd = 1 : 6 Mol, enthält ≈4 CH$_3$O-Gruppen je Melamin) in wäßriger Lösung verwendet.

Die nach 17.1 bis 17.4 erhaltenen Mikrokapseldispersionen sind in der Tabelle II charakterisiert.

13

Tabelle II

| Mikrokapsel-dispersion aus Beispiel | Gehalt an Feststoff [%] | Viskosität [mPas] | Durchmesser der Kapsel [µm] | JD nach Ib) [%] | JCF nach Ia) [%] |
|---|---|---|---|---|---|
| 17.1 | 19,4 | 100 | 2—3 | 47 | 0 |
| 17.2 | 29,5 | 155 | 2—3 | 52 | 0 |
| 17.3 | 42,5 | 212 | 2—4 | 49 | 0 |
| 17.4 | 57,0 | 186 | 2—5 | 55 | 1 |

## Beispiel 18

In einem zylindrischen Glasgefäß (Volumen: 4 l), das mit einem dreiflügeligen Propellerrührer und 3 senkrecht zur Wand stehenden Stromstörerblechen ausgerüstet ist, werden 160 g einer 20%igen Lösung von Poly-2-acrylamido-2-methyl-propansulfonsäure/Natriumsalz (Viskosität: 770 mPas; K-Wert: 129) und 940 g Wasser vorgelegt, auf pH 4,5 eingestellt und auf 60°C erwärmt. Dann werden 800 g der in Beispiel 1 angegebenen Kernmateriallösung einemulgiert und in 1 h eine Lösung von 120 g eines partiell methylierten Melamin-Formaldehyd-Vorkondensats (Molverhältnis 1 : 5,25, enthält 2,3 $CH_3O$-Gruppen je Melamin) in 132 g Wasser gleichmäßig unter Rühren (1500 Upm) zugegeben. Bereits nach etwas weniger als 70 min nach beendeter Zugabe des Vorkondensats geben die Kapseln, nach dem Verdünnen mit Wasser, auf einer Kieselgelplatte nur noch eine ganz geringe Blaufärbung. Nach der Zugabe des Vorkondensats werden die Kapseln 4 Stunden bei 60°C ausgehärtet. Der Ansatz wird abgekühlt und neutralisiert.

Der Feststoffgehalt der erhaltenen Dispersion beträgt 41,7%, ihre Viskosität 220 mPas. Die Dispersion enthält einzelne, kugelförmige Mikrokapseln mit glatter Oberfläche mit Durchmessern von 30 bis 60 µm und damit eine enge Durchmesserverteilung. Einige Kapseln zeigen flache Einbuchtungen; kleinere und wesentlich größere Kapseln fehlen. Wegen der großen Kapseln erhält man beim Auftragen auf Papier äußerst reibempfindliche Durchschreibepapiere, die kaum lesbare Durchschriften geben. Der Aufstrich (mit Haarpinsel) auf einer CF-Nehmerseite nach Ia) zeigt bei einem weißen Untergrund nur ganz vereinzelte blaue Punkte.

## Vergleichsbeispiel 1

Es wird wie im Beispiel 1 angegeben gearbeitet, jedoch werden anstelle der Poly-2-acrylamido-2-methyl-propansulfonsäure/Natriumsalz

1.1  40 g Polyacrylsäure (K-Wert: 132; Viskosität: 800 mPas);
1.2  26 g der unter 1.1 genannten Polyacrylsäure;
1.3  40 g Polyacrylsäure (K-Wert: 162; Viskosität: 3600 mPas)

verwendet. Die Emulgierung des Kernmaterials erfolgte bei 1.1 und 1.3 mit 7500 Upm, bei 1.2 mit 8000 Upm. Die erhaltenen Mikrokapseldispersionen sind in der folgenden Tabelle charakterisiert:

| | Vergleichsbeispiele | | |
|---|---|---|---|
| | 1.1 | 1.2 | 1.3 |
| Feststoffgehalt [%] | 42,9 | 40,0 | 41,9 |
| Viskosität [mPas] | 49 | 30 | 3700 |
| Siebrückstand[1]) [g] | 1,5 | 50 | 8[2]) |
| Mittlerer Kapseldurchmesser[3]) [μm] | 3—6 | 2—18 | 1—4 |
| | einige Agglomerate | viele Agglomerate | einige Agglomerate |
| JD-Wert nach Ib) [%] | 54 | 54 | 44 |
| JCF-Wert nach Ia) [%] | 8 | 1 | 10 (d. h. blau-verfärbt) |
| Schriftstärke, Lesbarkeit | schlecht | schlecht | ausreichend |

[1]) Maschenweite 40 μm;
[2]) und 80 g Wandbelag.
[3]) Gemessen unter dem Mikroskop.

Wie aus dem Ergebnis der Vergleichsversuche zu ersehen ist, erhält man in Gegenwart von polyacrylsaurem Natrium anstelle der Poly-2-acrylamido-2-methyl-propansulfonsäure/Natriumsalz keine ebenbürtigen Mikrokapseln bzw. Kapseldispersionen.


## Vergleichsbeispiel 2

Es wird nach den Angaben des Beispiels 1 gearbeitet, jedoch werden

1) anstelle der Poly-2-acrylamido-2-methyl-propansulfonsäure/Natriumsalz die gleiche Menge (40 g) Polyacrylsäure/Natriumsalz (K-Wert: 131; Viskosität: 515 mPas) verwendet und
2) das Melamin-Formaldehyd-Vorkondensat zu Beginn auf einmal zugegeben.

20 Minuten nach der Zugabe beginnt die Mischung zu gelieren. Durch Zufügen von 300 g kaltem Wasser wurde eine durchmischbare Suspension erhalten.

Nach dem Aushärten erhält man eine Kapseldispersion mit einem Feststoffgehalt von 35,6% und einer Viskosität von 30 mPas. Die Durchmesser der Kapseln 1 bis 3 μm; ein Teil ist agglomeriert, Siebrückstand (40 μm Maschenweite): 1 g. Die Prüfung nach Ib) gab einen JD-Wert von 44% und nach Ia) einen JCF-Wert von 13%, d. h., man erhält auf der CF-Schicht eine blaue Färbung.


## Vergleichsbeispiel 3

Es wird nach den Angaben des Beispiels 1 gearbeitet, jedoch werden

1) als polymere Sulfonsäure 40 g Poly-2-acrylamido-2-methyl-propansulfonsäure/Natriumsalz (K-Wert: 134; Viskosität: 1095 mPas) verwendet und
2) das Melamin-Formaldehyd-Vorkondensat zu Beginn auf einmal zugegeben.

20 Minuten nach der Zugabe des Vorkondensats beginnt die Dispersion zu erstarren, nach 10 Minuten wird das Gemisch durch Zugeben von 300 g Wasser wieder durchmischbar gemacht. Nach dem Aushärten, Abkühlen und Sieben (Rückstand: 3 g) erhält man eine Kapseldispersion mit 35,6% Feststoff und einer Viskosität von 127 mPas. Die Dispersion enthält viele Kapselagglomerate. Durchmesser der Kapseln 1 bis 4 μm.

Bei der Prüfung auf Papier wurde nach Ib) ein JD-Wert von 48% und nach Ia) ein JCF-Wert von 1% gemessen. Wegen der Agglomerate erhält man mit der Dispersion Durchschreibepapiere mit einer erhöhten Reibempfindlichkeit.

15

## Vergleichsbeispiel 4

Es wird wie im Vergleichsbeispiel 3 verfahren, jedoch werden dem Gemisch sofort, wenn keine Durchmischung mehr erfolgt, 300 g Wasser zugegeben.

Man erhält nach dem Sieben (Rückstand: 10 g) eine Kapseldispersion mit 37,5% Feststoffgehalt und einer Viskosität von 46 mPas. Die Dispersion enthält Einzelkapseln und keine Agglomerate. Kapseldurchmesser: 2 bis 5 µm.

Bei der Prüfung auf Papier wurde nach Ib) ein JD-Wert von 46% und nach Ia) ein JCF-Wert von 1% gemessen.

## Vergleichsbeispiel 5

### (DE-A-2 757 528, Beispiel 10)

In einem zylindrischen Glasgefäß (Volumen: 2 l) mit Propellerrührer und an der Glaswand befestigten 3 Strombrechern (s. Beispiel 18) werden bei 1500 Upm des Rührers 360 g des Kernmaterials aus Beispiel 1 in einer Lösung von 24 g einer Polyacrylsäure (Molgewicht ca. 21 800, bestimmt über Viskositätsmessung; K-Wert: 65; Viskosität: 38 mPas; entspricht ungefähr »Acrysol A-3« des Beispiels 10 der DE-A) in 400 g Wasser und 80 g eines partiell methylierten Melamin-Formaldehyd-Vorkondensats (Molverhältnis 1 : 3,9; enthält $\approx$ 2,4 $CH_3O$-Gruppen je Melamin) bei pH 4,0 emulgiert. Anschließend wird ein Wasserbad von 40°C unter das Gefäß gestellt und das Wasserbad in 15 min auf 55°C erhitzt. Nach 60 min bei 55°C ist die Kapselbildung abgeschlossen. Die Dispersion wird abgekühlt und neutralisiert (ca. 4 g Rückstand an Rühr- und Glasgefäß).

Beim Sieben durch ein Sieb von 40 µm Maschenweite erhält man 20 g Siebrückstand, der unter anderem Kapseln mit einem Durchmesser von bis 180 µm enthält. Die durchgelaufene Dispersion hatte eine Viskosität von 56 mPas und einen Feststoffgehalt von 47,7%. Trägt man die verdünnte Lösung auf Kieselgel auf, so erhält man einen nahezu farblosen Untergrund mit vielen blauen Punkten. Die Dispersion enthält Kapseln von 3 bis 40 µm Durchmesser, wobei deutlich eine bimodale Verteilung zu beobachten ist (2 – 6 und 12 – 24 µm). Die Kapseln haben viele Eindellungen und Falten, besonders die des Siebrückstandes.

Wird der oben angegebene Ansatz verdoppelt und in der in Beispiel 1 angegebenen Apparatur bei 10 000 Upm emulgiert, erhält man nach einigen Minuten eine Emulsion, die 3 bis 15 µm große Tröpfchen enthält. Beim Aufheizen im Wasserbad, bei einer Temperatur von 49°C (10 min nach dem Aufheizbeginn) koaguliert die Emulsion und wird fest, so daß ein Durchmischen nicht mehr möglich ist.

## Vergleichsbeispiel 6

### (DE-A-2 757 528, Beispiel 7)

In der im Vergleichsbeispiel 5 beschriebenen Apparatur wird ein Gemisch aus 32,7 g einer wäßrigen 35%igen Lösung eines Copolymerisats aus Vinylmethyläther-Maleinsäure (1 : 1 Mol), 292 g Wasser und 42 g des im Vergleichsbeispiel 5 angegebenen Melamin-Formaldehyd-Vorkondensats vorgelegt und auf pH 4,5 eingestellt. Das Vinylmethyl-Maleinsäure-Copolymere hat einen K-Wert von 69, die Viskosität der 20%igen Lösung beträgt 138 mPas und entspricht ungefähr dem in Beispiel 7 der DE-A-2 757 528 genannten Copolymeren, das unter dem Namen ®Gantrez AN 119 im Handel ist. In der vorgelegten wäßrigen Lösung werden bei 1500 Upm 300 g des im Beispiel 1 angegebenen Kernmaterials (Farbbildnerlösung) emulgiert. Der Ansatz wird dann unter Rühren mit 1500 Upm auf 55°C aufgeheizt. 30 min nach dem Erreichen der Temperatur von 55°C bilden sich die Kapseln. Der Ansatz wird noch 2,5 h bei 55°C gehalten, danach abgekühlt. Die entstandene Dispersion hat eine Viskosität von 194 mPas und einen Feststoffgehalt von 49,7%. Die Teilchen sind weitgehend agglomeriert. Unter dem Mikroskop sieht man Kapseln mit Teilchendurchmessern von 1 bis 3 µm und solche von 10 bis 30 µm Durchmesser. Zum Teil weisen die Kapseln unregelmäßige Formen auf. Streicht man eine verdünnte Probe der Dispersion auf Kieselgel auf, so tritt Blaufärbung ein. Die Dispersion konnte nicht durch ein Sieb mit 40 µm Maschenweite gesiebt werden.

Wird der oben angegebene Ansatz verdoppelt und in der im Besipiel 1 beschriebenen Apparatur bei 10 000 Upm emulgiert, so entstehen in der Emulsion 10 min nach Erreichen der Temperatur von 55°C dicke Flocken, und das Kernmaterial beginnt sich an der Oberfläche in großen Öltröpfchen anzureichern. Eine für eine praktische Anwendung geeignete Kapseldispersion wird nicht erhalten.

Vergleichsbeispiel 7

(DE-A-2 757 528, Beispiel 4)

7.1 In der im Vergleichsbeispiel 5 beschriebenen Apparatur werden 24 g einer Polyacrylsäure (Molekulargewicht 5000; K-Wert 35; Viskosität der 20%igen Lösung 13,4 mPas; entspricht der im Beispiel 4 der DE-A-2 757 528 unter dem Namen »Good-rite K-732« im Handel erhältlichen Polyacrylsäure) in 580 g Wasser vorgelegt und in dieser wäßrigen Lösung 400 g des in Beispiel 1 angegebenen Kernmaterials bei 1500 Upm emulgiert. Die Suspension wird auf pH 5,1 eingestellt und auf 55°C erwärmt. Bei dieser Temperatur werden in 2 min 93,2 g einer klaren Lösung (die durch Erhitzen einer Mischung aus 252 g Melamin und 324 g wäßriger 37%iger Formaldehydlösung bei pH 9,0 auf 90°C erhalten, durch Neutralisieren auf pH 7,3 mit Ameisensäure stabilisiert und abgekühlt wurde; die Lösung ist in jedem Verhältnis mit Wasser ohne Trübung mischbar) zugegeben. Die Emulsion wird 22 Stunden bei pH 5,1 gerührt, die erhaltene Mikrokapseldispersion neutralisiert und gesiebt. Im Gefäß blieben ca. 12 g fester Belag an der Wand sowie nicht verkapselte Öltropfen. Siebrückstand: 44 g. Feststoffgehalt in der gesiebten Dispersion: 37,9%, Viskosität: 65 mPas. Die Teilchen haben Durchmesser von 3 bis 40 μm. Die sehr kleinen Teilchen sind agglomeriert. Die Dispersion färbt Kieselgel stark blau an, wenn man die verdünnte Dispersion aufträgt und trocknet.

7.2 Wiederholt man den Versuch 7.1 mit einer Polyacrylsäure mit einem Molekulargewicht von 21 800 (K-Wert: 60), so wird die Emulsion nach Zugabe des Vorkondensats steif, wenn man bei 55°C den pH-Wert von 6,1 auf 5,5 senkt. Man erhält keine Mikrokapseln.

7.3 Arbeitet man in der in Beispiel 1 beschriebenen Apparatur, wendet jedoch das Zweifache der bei 7.1 angegebenen Mengen an, dann wird die Emulsion bei pH 5,5 5 min nach der Zugabe des Vorkondensats fest.

7.4 Arbeitet man wie bei 7.3 angegeben, verwendet jedoch die unter 7.2 angegebene Polyacrylsäure, dann wird die Emulsion bereits beim Einstellen des pH-Wertes von 6,1 auf 5,5 fest.

Beispiel 19

Es wird nach den Angaben des Beispiels 1 gearbeitet, jedoch werden folgende Sulfonsäuregruppen enthaltende Polymere verwendet:

19.1 40 g eines Copolymeren aus 95 Teilen 2-Acrylamido-2-methyl-propansulfonsäure/Natriumsalz und 5 Teilen Hydroxypropylacrylat (K-Wert: 132; Viskosität der 20%igen Lösung: 681 mPas) in 160 g Wasser;

19.2 40 g eines Copolymeren aus 80 Teilen 2-Acrylamido-2-methyl-propansulfonsäure/Natriumsalz und 20 Teilen Hydroxypropylacrylat;

19.3 40 g eines Copolymeren aus 80 Teilen 2-Acrylamido-2-methyl-propansulfonsäure/Natriumsalz und 20 Teilen Methylacrylat (K-Wert: 130; Viskosität: 1421 mPas);

19.4 40 g eines Copolymeren aus 90 Teilen 2-Acrylamido-2-methyl-propansulfonsäure/Natriumsalz und 10 Teilen Äthylacrylat (K-Wert: 142; Viskosität: 1100 mPas).

Nach 19.2 entsteht eine sehr feinteilige Emulsion, die 25 min nach Beginn der Zugabe des Vorkondensats schäumt und dann steif wird.

Die nach 19.1, 19.3 und 19.4 erhaltenen Mikrokapseldispersionen sind in der folgenden Tabelle charakterisiert.

| | Beispiel | | |
|---|---|---|---|
| | 19.1 | 19.3 | 19.4 |
| Feststoffgehalt [%] | 42,2 | 41,8 | 42,5 |
| Viskosität [mPas] | 485 | 323 | 435 |
| Siebrückstand [g] | 1,2 | 4 | 1,2 |
| Kapseldurchmesser [μm] | 1—3 | 1—3 | 1—3 |
| JD-Wert nach Ib) [%] | 45 | 45 | 47 |
| JCF-Wert nach Ia) [%] | 0 | 0 | 0 |

## Beispiel 20

Es wird eine Mikrokapseldispersion nach den Angaben des Beispiels 7 hergestellt, jedoch werden anstelle der Farbbildnerlösung 800 g des Fungizids N-Tridecyl-2,6-dimethylmorpholin als Kernmaterial in der wäßrigen Phase bei pH 5 dispergiert.

Man erhält eine Kapseldispersion mit einem Feststoffgehalt von 42,8% und Kapseln von 2 bis 5 μm Durchmesser. Eine Probe der Dispersion wird mit Hexan extrahiert und im Extrakt das N-Tridecyl-2,6-dimethylmorpholin bestimmt. Es wurden dabei weniger als 0,1% des eingesetzten Morpholinderivats gefunden, d. h., das Morpholinderivat wurde praktisch vollständig eingekapselt.

Durch die Einkapselung wird die Abdampfrate des Fungizids von $259 \cdot 10^{-3}\% \cdot h^{-1}$ (unverkapselt) auf $1,62 \cdot 10^{-3}\% \cdot h^{-1}$ gesenkt, wodurch eine vorteilhafte Verlängerung der Einwirkungszeit des Fungizids erreicht wird.

## Patentansprüche

1. Verfahren zur Herstellung von Mikrokapseln durch Kondensation von Melamin-Formaldehyd-Vorkondensaten und/oder deren $C_1$- bis $C_4$-Alkyläthern in Wasser, in dem das feste, flüssige oder gasförmige, im wesentlichen wasserunlösliche, den Kapselkern bildende Material dispergiert ist, in Gegenwart von gelösten Polymeren, die negativ geladene ionische Gruppen enthalten, bei pH-Werten von 3 bis 6,5 und Temperaturen von 20 bis 100°C, dadurch gekennzeichnet, daß das in Wasser gelöste Polymere ein Sulfonsäuregruppen tragendes Homo- oder Copolymerisat, das frei von Phenyl und/oder Sulfophenylgruppen ist und das einen K-Wert nach Fikentscher von 100 bis 170 oder eine Viskosität von 200 bis 5000 mPas bei einem Schergefälle von $489 \, s^{-1}$ (gemessen in 20gew.-%iger Lösung bei 25°C) hat, und das Melamin-Formaldehyd-Vorkondensat nach Maßgabe der Kondensation kontinuierlich oder in Portionen zugegeben wird.

2. Verfahren gemäß Anspruch 1, dadurch gekennzeichnet, daß als wasserlösliches Sulfonsäuregruppen tragendes Polymeres ein Homopolymerisat aus Sulfoäthyl(meth)-acrylat, Sulfopropyl(meth)-acrylat, Maleinimid-N-äthansulfonsäure oder 2-Acrylamido-2-methyl-propansulfonsäure oder ein Copolymerisat aus Vinylsulfonsäure, Sulfoäthyl(meth)-acrylat, Sulfopropyl(meth)-acrylat, Maleinimid-N-äthansulfonsäure und/oder 2-Acrylamido-2-methyl-propansulfonsäure und $C_1$- bis $C_3$-Alkylacrylat, Hydroxy-$C_2$- bis -$C_4$-alkylacrylat oder N-Vinylpyrrolidon verwendet wird, wobei die Copolymerisate mit den Acrylestern mindestens 70 Gew.-% und die mit dem N-Vinylpyrrolidon mindestens 5 Gew.-%, bezogen auf das Polymerisat, an Sulfonsäuregruppen tragenden Comonomeren enthalten.

3. Verfahren gemäß Anspruch 1, dadurch gekennzeichnet, daß als wasserlösliches sulfonsäuregruppentragendes Polymeres ein Homopolymerisat aus Sulfoäthyl(meth)-acrylat, Sulfopropyl(meth)-acrylat, Maleinimid-N-äthansulfonsäure oder 2-Acrylamido-2-methyl-propansulfonsäure verwendet wird.

4. Verfahren nach den Ansprüchen 1 bis 3, dadurch gekennzeichnet, daß das Sulfonsäuregruppen tragende Copolymerisat einen K-Wert nach Fikentscher von 115 bis 160 oder eine Viskosität von 400 bis 4000 mPas bei einem Schergefälle von $489 \, s^{-1}$ (gemessen in 20gew.-%iger wäßriger Lösung bei 25°C) aufweist.

5. Verfahren gemäß den Ansprüchen 1 bis 4, dadurch gekennzeichnet, daß die wäßrige Phase 1,0 bis 5,5 Gew.-%, bezogen auf die wäßrige Phase, an dem Sulfonsäuregruppen tragenden Polymerisat gelöst enthält.

6. Verfahren gemäß den Ansprüchen 1 bis 4, dadurch gekennzeichnet, daß die wäßrige Phase 1,5 bis 4,5 Gew.-%, bezogen auf die wäßrige Phase, an dem Sulfonsäuregruppen tragenden Polymerisat gelöst enthält.

7. Verfahren gemäß den Ansprüchen 1 bis 6, dadurch gekennzeichnet, daß die Dispersion bis zur Ausbildung der Mikrokapseln unter Scherbedingungen durchmischt wird und anschließend während der Auskondensation (Härtung) des Wandmaterials in üblicher Weise gerührt wird.

8. Verfahren gemäß den Ansprüchen 1 bis 7, dadurch gekennzeichnet, daß man in der Kapseldispersion nach Beendigung der Aushärtung den Formaldehydüberschuß durch Reaktion mit Substanzen, die quantitativ bis weitgehend vollständig mit Formaldehyd reagieren, bei pH 3 bis 10 und höherer Temperatur entfernt.

9. Verfahren gemäß Anspruch 8, dadurch gekennzeichnet, daß man als Formaldehyd bindende Substanzen Äthylenharnstoff, Melamin oder Gemische davon verwendet.

10. Mikrokapseln, erhalten nach dem Verfahren gemäß den Ansprüchen 1 bis 9.

11. Verwendung der Mikrokapseln gemäß Anspruch 10 zur Herstellung von druckempfindlichen Aufzeichnungssystemen.

12. Druckempfindliches Aufzeichnungssystem, enthaltend Mikrokapseln gemäß Anspruch 10.

## Claims

1. A process for the preparation of microcapsules by condensing melamine-formaldehyde precondensates and/or their $C_1 - C_4$-alkyl ethers in water in which the solid, liquid or gaseous substantially water-insoluble material forming the capsule core is dispersed, in the presence of dissolved polymers which contain negatively charged ionic groups, at a pH of from 3 to 6.5 and at from 20 to 100°C, wherein the polymer dissolved in the water is a homopolymer or copolymer which possesses sulfonic acid groups and contains neither phenyl nor sulfophenyl groups, and has a K value, measured by the Fikentscher method, of from 100 to 170, or a viscosity of from 200 to 5,000 mPa · s at a shear gradient of 489 $s^{-1}$ (the viscosity being measured in 20% strength by weight solution at 25°C) and the melamine-formaldehyde precondensate is added continuously or in portions in step with the rate of condensation.

2. A process as claimed in claim 1, wherein the water-soluble polymer possessing sulfonic acid groups is a homopolymer of sulfoethyl acrylate, sulfoethyl methacrylate, sulfopropyl acrylate, sulfopropyl methacrylate, maleimide-N-ethanesulfonic acid or 2-acrylamido-2-methyl-propanesulfonic acid or a copolymer of vinylsulfonic acid, sulfoethyl acrylate, sulfoethyl methacrylate, sulfopropyl acrylate, sulfopropyl methacrylate, maleimide-N-ethanesulfonic acid and/or 2-acrylamido-2-methyl-propanesulfonic acid and a $C_1 - C_3$-alkyl acrylate, a hydroxy-$C_2 - C_4$-alkyl acrylate or N-vinylpyrrolidone, the copolymers with the acrylic esters containing not less than 70% by weight, and the copolymers with N-vinylpyrrolidone containing not less than 5% by weight, in each case based on the copolymer, of comonomers, possessing sulfonic acid groups, as copolymerized units.

3. A process as claimed in claim 1, wherein the water-soluble polymer possessing sulfonic acid groups is a homopolymer of sulfoethyl acrylate, sulfoethyl methacrylate, sulfopropyl acrylate, sulfopropyl methacrylate, maleimide-N-ethanesulfonic acid or 2-acrylamido-2-methyl-propanesulfonic acid.

4. A process as claimed in claims 1 to 3, wherein the copolymer possessing sulfonic acid groups has a Fikentscher K value of from 115 to 160 or a viscosity of from 400 to 4,000 mPa · s (measured in 20% strength by weight aqueous solution at 25°C) at a shear gradient of 489 $s^{-1}$.

5. A process as claimed in claims 1 to 4, wherein from 1.0 to 5.5% by weight, based on the aqueous phase, of the polymer possessing sulfonic acid groups are dissolved in the aqueous phase.

6. A process as claimed in claims 1 to 4, wherein from 1.5 to 4.5% by weight, based on the aqueous phase, of the polymer possessing sulfonic acid groups are dissolved in the aqueous phase.

7. A process as claimed in claims 1 to 6, wherein the dispersion is mixed under shearing conditions until the microcapsules are formed, and is then stirred in a conventional manner whilst the condensation (hardening) of the wall material is being completed.

8. A process as claimed in claims 1 to 7, wherein, after completion of hardening, the excess formaldehyde in the capsule dispersion is removed by reaction with a substance which reacts either quantitatively or substantially quantitatively with formaldehyde, at pH 3—10 and elevated temperature.

9. A process as claimed in claim 8, wherein ethyleneurea, melamine or a mixture of these is used as the substance which binds formaldehyde.

10. Microcapsules when obtained by the process of claims 1 to 9.

11. The use of microcapsules as claimed in claim 10 for producing pressure-sensitive recording systems.

12. A pressure-sensitive recording system containing microcapsules as claimed in claim 10.

**Revendications**

1. Procédé pour la fabrication de microcapsules par condensation de pré-condensats de mélamine-formaldéhyde et/ou de leurs éthers d'alcoyles en $C_1$ à $C_4$ dans une eau dans laquelle est dispersée la matière solide, liquide ou gazeuse, pratiquement insoluble dans l'eau, qui constitue le noyau des capsules, en présence de polymères dissous qui contiennent des groupes ioniques chargés négativement, à des pH de 3 à 6,5 et à des températures de 20 à 100°C, caractérisé en ce que le polymère dissous dans l'eau est un homo- ou copolymère portant des groupes acide sulfonique qui est exempt de groupes phényle et/ou sulfophényle et qui a une valeur K du coefficient de l'équation de Fikentscher de 100 à 170 ou une viscosité de 200 à 5000 mPs avec une pente de cisaillement de 489 s$^{-1}$ (mesurée en solution à 20% en poids à 25°C), et en ce que le pré-condensat de mélamine-formaldéhyde est ajouté de manière continue ou par portions en proportion de la condensation.

2. Procédé selon la revendication 1, caractérisé en ce qu'on utilise, en tant que polymère hydrosoluble, portant des groupes acide sulfonique, un homopolymère de (méth)acrylate de sulfoéthyle, de (méth)acrylate de sulfopropyle, d'acide maléinimido-N-éthane-sulfonique ou d'acide 2-acrylamido-2-méthylpropane-sulfonique, ou un copolymère d'acide vinylsulfonique, de (méth)acrylate de sulfoéthyle, de (méth)acrylate de sulfopropyle, d'acide maléinimido-N-éthane-sulfonique et/ou d'acide 2-acrylamido-2-méthylpropane-sulfonique et d'acrylate d'alcoyle en $C_1$ à $C_3$, d'acrylate d'hydroxyalcoyle en $C_2$ à $C_4$ ou de N-vinylpyrrolidone, les copolymères avec les esters acryliques contenant au moins 70% en poids, par rapport au polymère, de comonomères portant des groupes acide sulfonique et les copolymères avec la N-vinylpyrrolidone en contenant au moins 5% en poids.

3. Procédé selon la revendication 1, caractérisé en ce qu'on utilise, en tant que polymère hydrosoluble portant des groupes acide sulfonique, un homopolymère de (méth)acrylate de sulfoéthyle, de (méth)acrylate de sulfopropyle, d'acide maléinimido-N-éthane-sulfonique ou d'acide 2-acrylamido-2-méthyl-propane-sulfonique.

4. Procédé selon l'une quelconque des revendications 1 à 3, caractérisé en ce que le copolymère portant des groupes acide sulfonique présente une valeur K du coefficient de l'équation de Fikentscher de 115 à 160 ou une viscosité de 400 à 4000 mPas avec une pente de cisaillement de 489 s$^{-1}$ (mesurée en solution aqueuse à 20% en poids à 25°C).

5. Procédé selon l'une quelconque des revendications 1 à 4, caractérisé en ce que la phase aqueuse contient en solution 1,0 à 5,5% en poids, par rapport à la phase aqueuse, de polymère portant des groupes acide sulfonique.

6. Procédé selon l'une quelconque des revendications 1 à 4, caractérisé en ce que la phase aqueuse contient en solution 1,5 à 4,5% en poids, par rapport à la phase aqueuse, de polymère portant des groupes acide sulfonique.

7. Procédé selon l'une quelconque des revendications 1 à 6, caractérisé en ce que la dispersion est mélangée intimement dans des conditions de cisaillement jusqu'à la formation des microcapsules, à la suite de quoi elle est agitée de la manière habituelle pendant la condensation complète (durcissement) de la matière de paroi.

8. Procédé selon l'une quelconque des revendications 1 à 7, caractérisé en ce qu'après l'achèvement du durcissement complet, on élimine l'excès de formaldéhyde, à un pH de 3 à 10 et à une température élevée, par réaction avec des substances qui réagissent quantitativement ou dans une mesure pratiquement complète avec le formaldéhyde.

9. Procédé selon la revendication 8, caractérisé en ce qu'on utilise, en tant que substances fixant le formaldéhyde, l'éthylène-urée, la mélamine ou des mélanges de ces substances.

10. Microcapsules obtenues par le procédé suivant l'une quelconque des revendications 1 à 9.

11. Utilisation des microcapsules selon la revendication 10 pour la fabrication de systèmes autocopiants sensibles à la pression.

12. Système autocopiant sensible à la pression, contenant des microcapsules selon la revendication 10.